# EUROPEAN PATENT APPLICATION

(11) **EP 1 630 933 A2**
(43) Date of publication of application: **01.03.2006**
(21) Application number: 04029336.7
(22) Date of filing: 10.12.2004
(51) Int. Cl.: H02K 11/04

(54) **Alternator having insulation member for stator coil**

(30) Priority: 31.08.2004 KR 2004069042
(71) Applicant: VALEO ELECTRICAL SYSTEMS KOREA LTD., Kyongju-si, Kyongsangbuk-do (KR)
(72) Inventor: Lee, Hyun-Cheol, Dong-gu Daegu-si, 701-032 (KR)
(74) Representative: TER MEER - STEINMEISTER & PARTNER GbR

(57) **Abstract**

An alternator has an insulation member to be attached to an inner surface of a rear bracket for preventing a lead line of a coil of a stator connected with a rectifier assembly from contacting the rear bracket provided in its surrounding portion, thereby enhancing insulation effect and assembling workability, wherein the rear bracket has a depressed portion formed in an inner surface requiring insulation by removing a thickness of the inner surface partially, and an insulation plate having a thickness corresponding to the depth of the depressed portion of the rear bracket is assembled into the depressed portion.

## Description

### BACKGROUND OF THE INVENTION

### 1. Field of the Invention

The present invention relates to an alternator having an insulation member for a stator coil, and in particular to, an improved alternator having an insulation member for a stator coil for preventing a lead line of a stator coil extended from the stator to a rectifier assembly from contacting a bracket housing receiving the stator.

### 2. Description of the Background Art

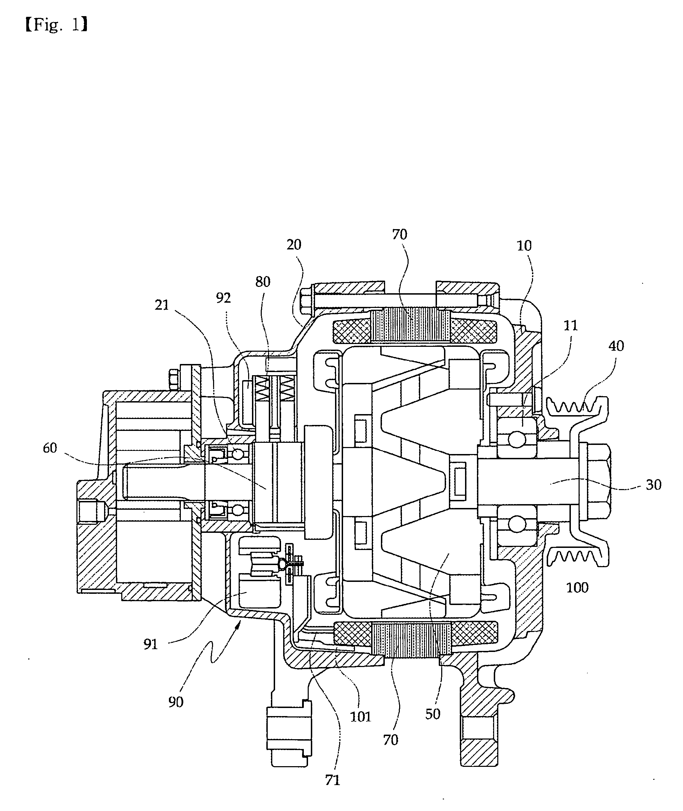

Generally, as shown in Figure 1, a vehicle alternator includes a bracket housing 1 having a front bracket 10 and a rear bracket 20 with shaft support bearings 11 and 21, a shaft 30 axially mounted in the bracket housing 1 by the bearings, a driving pulley 40 axially mounted to an exposed end of the shaft, a rotor 50 axially mounted in the middle of the shaft, a slip ring 60 axially mounted at the other end of the shaft, a stator 70 fixed in the interiors of the rotor and the bracket housing, a brush assembly 80 contacting the slip ring 60, a rectifier assembly 90 connected to the brush assembly, and a heat sink 91 and a regulator 92 provided at a side of the brush assembly and the rectifier assembly.

In the above state, a lead line 71 of a coil of the stator is connected with the rectifier assembly 90. An insulation member required for preventing a short when the lead line 71 of the coil contacts the rear bracket.

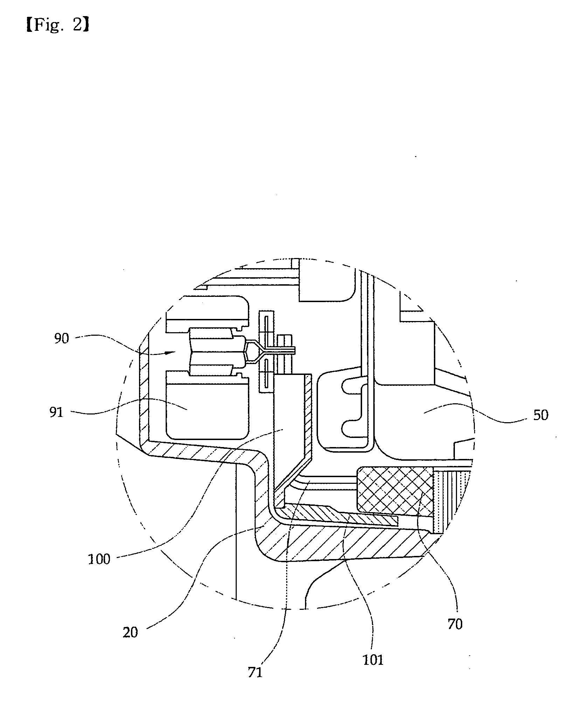

As shown in Figure 2, in the prior art, an insulation plate 100 for covering one side of the rectifier assembly 90 is used as a general insulation member, and one end of the insulation plate is extended in the shape of "L" for thereby forming an extension piece 101.

The extension piece 101 has to be fitted on a periphery of the coil along an inner surface of the rear bracket 20, in the state that the extension piece 101 faces inward after the insulation plate 100 is assembled.

The prior art has, however, a disadvantage that the extension piece 101 may be fitted incorrectly. In some cases, the extension piece 101 is not easily fitted on the periphery of the coil since the extension piece 101 is held by a periphery of the stator.

### SUMMARY OF THE INVENTION

Therefore, the present invention is derived to resolve the above problems of the prior art and has an object to provide an alternator having an insulation member for a stator coil.

It is another object of the present invention to provide an alternator having an insulation member for a stator coil capable of enhancing insulation effect and assembling workability in such a manner that a lead line of a coil of a stator connected with a rectifier assembly is arranged not to contact a rear bracket provided in its surrounding portion, and an insulation member is attached to an inner peripheral surface of the bracket.

To achieve the above objects, an alternator that includes a bracket housing having a front bracket and a rear bracket having shaft support bearings, a shaft axially mounted in the bracket housing by the bearings, a driving pulley axially mounted to an exposed end of the shaft, a rotor axially mounted in the middle of the shaft, a slip ring axially mounted at the other end of the shaft, a stator fixed in the rotor and the bracket housing, a brush assembly contacting the slip ring, a rectifier assembly connected to the brush assembly, and a heat sink and a regulator provided at a side of the brush assembly and the rectifier assembly, is characterized in that the rear bracket has a depressed portion formed in an inner surface requiring insulation by removing a thickness of the inner surface partially, and an insulation plate having a thickness corresponding to the depth of the depressed portion of the rear bracket is assembled into the depressed portion.

The insulation plate includes at least one coupling protrusion on a surface contacting the depressed portion, and the depressed portion of the rear bracket is formed with at least one coupling groove for inserting the coupling protrusion therein, for thereby preventing any movement after assembling.

The insulation plate is formed of two or more pieces, and the depressed portion may be provided at two or more positions corresponding to pieces of the insulation plates.

### BRIEF DESCRIPTION OF THE DRAWINGS

The present invention will become better understood with reference to the accompanying drawings which are given only by way of illustration and thus are not limitative of the present invention, wherein;
Figure 1 is a cross sectional view illustrating the construction of a prior art alternator;
Figure 2 is a partially enlarged cross sectional view illustrating a conventional short prevention structure;
Figure 3 is a perspective view illustrating a short prevention member according to a preferred embodiment of the present invention; and
Figure 4 is a cross sectional view illustrating the short prevention member of the present invention.

### DETAILED DESCRIPTION OF THE PREFERRED EMBODIMENTS

The construction and operation according to the present invention will be described in more detail with reference to the accompanying drawings.

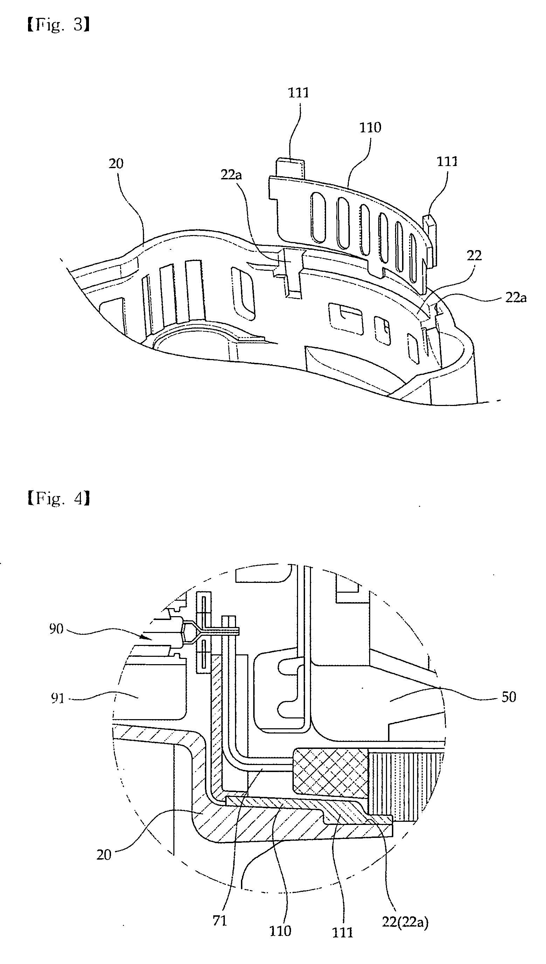

Figure 3 is a perspective view illustrating a short prevention member according to a preferred embodiment of the present invention, and Figure 4 is a cross sectional view illustrating the short prevention member of the present invention.

Referring to Figure 3 and Figure 4, an alternator according to the present invention includes a bracket housing 1 having a front bracket 10 and a rear bracket 20 having shaft support bearings 11 and 21, a shaft 30 axially mounted in the bracket housing 1 by the bearings, a driving pulley 40 axially mounted at an exposed end of the shaft, a rotor 50 axially mounted in the middle of the shaft, a slip ring 60 axially mounted at the other end of the shaft, a stator 70 fixed in the rotor and the bracket housing, a brush assembly 80 mounted adjacently to the slip ring 60, a rectifier assembly 90 connected with the brush assembly, and a heat sink 91 and a regulator 92 provided at a side of the brush assembly and the rectifier assembly.

At this time, in the present invention, the rear bracket 20 has a depressed portion 22 formed in an inner surface requiring insulation by removing a thickness of the inner surface partially. Further, an insulation plate 110 having a thickness corresponding to the depth of the depressed portion of the rear bracket is assembled into the depressed portion of the rear bracket 20.

The insulation plate 110 has at least one coupling protrusion 111 on a surface contacting the depressed portion 22. The depressed portion 22 is formed with a coupling groove portion 22a for inserting the coupling protrusion therein, for thereby preventing any movement after assembling. At this time, the coupling groove portion 22a is formed from an end of the rear bracket 20, so that the insulation plate 110 is inserted into the rear bracket 20 from an end of the insulation plate for assembling.

The insulation plate 110 according to the present invention may be provided with two or more of such the coupling groove portions 22a in different shapes.

In the alternator according to the present invention, the alternator is finished in such a manner that the insulation plate 110 is assembled to an inner surface of the rear bracket 20. Therefore, the assembling work for the rectifier assembly and other parts may be easily performed.

Namely, as shown in Figure 4, the parts such as the rectifier assembly 90, the heat sink 91, the regulator 92, and the like are first assembled, and then the rear bracket 20 is assembled. Then, the insulation plate 110 first contacts the surrounding portion of the lead line 71 of the coil of the stator 70, so that the lead line 71 does not contact the rear bracket, thereby preventing the short phenomenon.

As described above, in the present invention, when the rear bracket is fabricated, the depressed portion is formed at the inner surface of the rear bracket, and the insulation plate corresponding to the size of the depressed portion is assembled in the rear bracket, so that the lead line of the coil of the stator connected with the rectifier assembly does not contact with the rear bracket.

Therefore, desired insulation effect is obtained, and the lead line of the coil of the stator can be easily connected while simplifying the assembling work of the other parts.

As the present invention may be embodied in several forms without departing from the spirit or essential characteristics thereof, it should also be understood that the above-described examples are not limited by any of the details of the foregoing description, unless otherwise specified, but rather should be construed broadly within its spirit and scope as defined in the appended claims, and therefore all changes and modifications that fall within the meets and bounds of the claims, or equivalences of such meets and bounds are therefore intended to be embraced by the appended claims.

## Claims

1. An alternator that includes a bracket housing having a front bracket and a rear bracket having shaft support bearings, a shaft axially mounted in the bracket housing by the bearings, a driving pulley axially mounted to an exposed end of the shaft, a rotor axially mounted in the middle of the shaft, a slip ring axially mounted at the other end of the shaft, a stator fixed in the rotor and the bracket housing, a brush assembly contacting the slip ring, a rectifier assembly connected to the brush assembly, and a heat sink and a regulator provided at a side of the brush assembly and the rectifier assembly, is **characterized in that** the rear bracket has a depressed portion formed in an inner surface requiring insulation by removing a thickness of the inner surface partially, and an insulation plate having a thickness corresponding to the depth of the depressed portion of the rear bracket is assembled into the depressed portion.

2. The alternator of claim 1, wherein the depressed portion is formed from an end of the rear bracket.

3. The alternator of claim 1, wherein the insulation plate includes at least one coupling protrusion on a surface contacting the depressed portion, and the depressed portion is formed in at least one coupling groove for inserting the coupling protrusion therein for preventing movement.
